# EUROPÄISCHE PATENTSCHRIFT

(11) **EP 1 928 724 B1**
(45) Veröffentlichungstag und Bekanntmachung des Hinweises auf die Patenterteilung: **07.11.2012**
(21) Anmeldenummer: 06791644.5
(22) Anmeldetag: 25.08.2006
(51) Int. Cl.: B62D 25/06, B62D 65/06

(54) **KRAFTFAHRZEUGKAROSSERIE MIT EINEM ADAPTERTRÄGER FÜR EIN DACHMODUL, ADAPTERTRÄGER DAFÜR, SOWIE VERFAHREN ZU DEREN HERSTELLUNG**
MOTOR VEHICLE BODY WITH AN ADAPTOR SUPPORT FOR A ROOF MODULE, ADAPTOR SUPPORT THEREFOR, AND METHOD FOR PRODUCING SAID MOTOR VEHICLE BODY
CARROSSERIE DE VEHICULE AUTOMOBILE DOTEE D'UN ADAPTATEUR SUPPORTANT UN MODULE TOIT, ADAPTATEUR ET LEUR PROCEDE DE PRODUCTION

(30) Priorität: 16.09.2005 DE 102005044283
(43) Veröffentlichungstag der Anmeldung: 11.06.2008
(73) Patentinhaber: GM Global Technology Operations LLC, Detroit, MI 48265-3000 (US)
(72) Erfinder: MATHES, Bernhard, 65428 Rüsselsheim (DE); MILDEBERGER, Bernd, 55218 Ingelheim (DE); STAHLHUT, Richard, 63075 Offenbach (DE); STEVER, Tobias, 64390 Erzhausen (DE)
(74) Vertreter: Strauss, Peter
(86) Internationale Anmeldenummer: PCT/EP2006/008326
(87) Internationale Veröffentlichungsnummer: WO 2007/033747

(56) Entgegenhaltungen:
- EP-A2- 1 048 553
- EP-A2- 1 384 655
- WO-A1-2004/108504
- DE-A1- 10 249 419
- DE-A1-102005 016 458

## Beschreibung

Die vorliegende Erfindung betrifft eine Kraftfahrzeugkarosserie mit einem dachtragenden Rahmen, auf welchem ein Adapterträger zum Aufnehmen von Dachfenstern, Schiebedächern, Dachöffnungssystemen und/oder Dachmodulvarianten aufgesetzt und befestigt ist, gemäß dem Oberbegriff des Anspruchs 1 und einen für einen Einbau in eine erfindungsgemäße Kraftfahrzeugkarosserie geeigneten Adapterträger. Die Erfindung betrifft ferner ein Herstellungsverfahren hierfür.

Aus der Praxis sind Fahrzeuge bekannt, die mit einem Schiebedach, einem Sonnendach, einem Hebedach, einem Sonnen-/Schiebedach oder einem sonstigen Dachöffnungssystem und/oder einer Dachmodulvariante (kurz: Dachmodul) ausgestattet sind. Diese Fahrzeuge unterscheiden sich von herkömmlichen Standard-Fahrzeugen durch die dort vorhandene einfache, geschlossene, metallene Standard-Dachhaut. Diesen Fahrzeugen mit öffnenbaren Dächern ist gemeinsam, dass sie durch Öffnen der herkömmlichen, geschlossenen Dachhaut und Einsetzten des jeweils gewünschten Dachmoduls aus einem bereits fertig montierten Fahrzeug hergestellt werden, wie es bspw. in der

DE 88 16 505 U1 diskutiert ist. Das dort diskutierte Kraftfahrzeug-Schiebedach weist zwei Rahmen, nämlich einen Einschweißrahmen und einen Einschraubrahmen, auf. Das Schiebedach wird hierbei im zweiten Rahmen, dem Einschraubrahmen, befestigt, welcher seinerseits wiederum im mittleren Bereich des Einschweißrahmens verschraubt wird. Der erste Rahmen, also der Einschweißrahmen, der somit den Einschraubrahmen samt Dachmodul aufnimmt, wird in einer hierfür in der bereits vorhandenen Dachhaut eigens erzeugten Dachöffnung mit der restlichen verbleibenden Dachhaut verschweißt.

Diese aus der Praxis bekannte und seinerzeit bewährte Art des Einbauens und Befestigens des jeweiligen Dachmoduls am Kraftfahrzeug weist jedoch unter heutigen modernen Fertigungsgesichtspunkten Nachteile auf.

So besteht einer der Nachteile darin, dass ein sozusagen nachträglich - wie im Stand der Technik üblich - eingesetztes Dachmodul aufgrund der mit dem Modul zugleich ebenfalls benötigten Dachmodulöffnungs- und Befestigungsvorrichtungen und dem hiermit verbundenen Raumbedarf eine Einbuße an Kopfhöhe für den Fahrer und seine Fahrgäste gegenüber demselben Fahrzeugtyp mit herkömmlichem, geschlossenem Fahrzeugdach mit sich bringt.

Ein weiterer Nachteil besteht darin, dass zum Abdichten des Dachmoduls gegen die Fahrzeughaut gegen ein unerwünschtes und absolut zu vermeidendes Eintreten von Wasser, beispielsweise von Regen- oder Spritzwasser, in das Fahrzeuginnere besondere und zum Teil aufwändige und raumfordernde konstruktive Maßnahmen ergriffen werden müssen. Diese Maßnahmen und ihr besonderer Raumbedarf sind jedoch zu einem großen Teil darauf zurückzuführen, dass es sich bei dem späteren, also nach Abschluss der eigentlichen Fahrzeugendmontage, durchgeführten Einsetzen des/der Dachöffnungssystems/-variante konstruktiv um eine nachträgliche Maßnahme handelt, die am bereits fertigen Fahrzeug ausgeführt wird, weshalb dann das einzubauende Dachöffnunssystem auf die konkret vorzufindenden konstruktiven Randbedingungen mit entsprechendem Aufwand anzupassen ist.

Ein weiterer Nachteil des oben beschriebenen Vorgehens des nachträglichen Einbauens eines Dachmoduls in ein anfänglich geschlossenes, herkömmliches Fahrzeugdach besteht darin, dass die herkömmliche Fahrzeugdachhaut, die zum Einsetzen eines Dachmoduls lediglich geöffnet wurde, für sich allein in der Regel nicht die notwendige Stabilität aufweist, um das zusätzliche Gewicht des eingesetzten Dachmoduls einschließlich aller hierbei erforderlichen Öffnungs-, Abdichtungs- und Befestigungsvorrichtungen sicher zu tragen.

Vielmehr verliert das herkömmliche Blechdach infolge der Umbau- und Einbaumaßnahmen seine zuvor im unversehrten Zustand vorhandene, nötige Steifigkeit, insbesondere gegen Verwindung. Um diesem Nachteil abzuhelfen, wird häufig - wiederum nachträglich - eine zusätzliche Stütze des Dachmoduls montiert, welche einer direkten oder indirekten Abstützung des Dachmoduls, beispielsweise an einem Fahrzeugsäulenpaar, dient. Doch auch dieses zusätzliche Abstützen ist kostenintensiv und arbeitszeitaufwändig.

Allgemein gilt bei nachträglich eingebauten, angefügten oder veränderten Fahrzeugbauteilen und damit auch für das in vorstehend diskutierter Weise nachträglich eingebaute Dachmodul, dass der nachträgliche Einbau mit vergleichsweise hohem Anpassungs-, Änderungs-, Herstellungs-, Arbeits-, und Zeitaufwand verbunden ist, was letztendlich als nachteilig empfunden wird.

Aus der gattungsgemäßen DE 102 49 419 A1 ist eine Kraftfahrzeugkarosserie nach dem Oberbegriff des Anspruchs 1 bekannt. Ein Dachmodul dieser Karosserie umfasst ein Rahmenteil, in dem unterschiedliche Flächenteile verankert sein können. Das Rahmenteil ist in eine Dachöffnung herkömmlicher Art eingeklebt. Eine Vereinfachung bei der Herstellung der Dachöffnung ist mit der Verwendung des Rahmenteils nicht verbunden.

Demzufolge ist es Aufgabe der vorliegenden Erfindung, unter Vermeidung der vorstehend diskutierten Nachteile des Standes der Technik, eine Kraftfahrzeugkarosserie vorzuschlagen, die sich durch eine erhöhte Gestaltungsfreiheit bezüglich der Dachausgestaltung auszeichnet und insbesondere bereits im Kraftfahrzeugherstellungsprozess ohne großen zusätzlichen Aufwand kostengünstig mit Dachfenstern, Schiebedächern, Dachöffnungssystemen und/oder Dachmodulvarianten (kurz: Dachmodul) ausgestattet werden kann. Ferner soll ein entsprechendes Herstellungsverfahren angegeben werden.

Diese Aufgabe wird gelöst durch die Kraftfahrzeugkarosserie mit einem dachtragenden Rahmen und einem Adapterträger gemäß Anspruch 1. Die erfindungsgemäße Aufgabe wird ferner durch das Herstellungsverfahren einer Kraftfahrzeugkarosserie mit einem Adapterträger gemäß Anspruch 11 gelöst.

Dementsprechend schlägt die vorliegende Erfindung eine Kraftfahrzeugkarosserie mit wenigstens zwei Paar Säulen (z. B. je zwei A-, B- und C-Säulen) vor, welche mittels zweier sich in Kraftfahrzeuglängsrichtung erstreckender Strukturbauteile sowie zweier sich in Fahrzeugquerrichtung erstreckender Strukturbauteile zu einem dachtragenden Rahmen miteinander verbunden sind, wobei ein Adapterträger auf dem dachtragenden Rahmen aufgesetzt und mit diesem befestigt ist. Der Adapterträger dient zum Aufnehmen von Dachfenstern, Schiebedächern, Dachöffnungssystemen und/oder Dachmodulvarianten (kurz: Dachmodul).

Die erfindungsgemäße Kraftfahrzeugkarosserie zeichnet sich vorteilhaft dadurch aus, dass ein Adapterträger für Dachfenster, Schiebedächer, Dachöffnungssysteme und/oder Dachmodulvarianten von ausreichender Stabilität zum Aufnehmen wenigstens eines der zuvor genannten Module verfügbar ist. Damit liegt eine bereits werkseitig entworfene, durchgeplante, für den speziellen Verwendungszweck konstruktiv durchgebildete und hierfür vorgesehene, entsprechend ausgelegte und konstruktiv durchgestaltete Vorrichtung zum Aufnehmen eines Dachmoduls an der Fahrzeugkarosserie vor. Diese kann entsprechend der beim jeweiligen Fahrzeugtyp jeweils zu erwartenden kontruktiven und mechanischen Randbedingungen bereits vorab durchgerechnet und optimiert werden.

Dies bedeutet vorteilhaft, dass der Adapterträger der erfindungsgemäßen Kraftfahrzeugkarosserie aufgrund seiner konstruktiven Ausgestaltung und Auslegung in der Lage ist, auch ein schweres Dachmodul, wie beispielsweise ein Glasschiebedach, ausreichend stabil aufzunehmen und über bzw. mittels des dachtragenden Rahmens, mit welchem der Adapterträger befestigt ist, gegen die Fahrzeugkarosserie abzustützen. Diese Art der werkseitig bereits in der Planungsphase berücksichtigten und vorbereiteten Abstützung des im Adapterträger aufgenommenen Dachmoduls erlaubt eine Abstützung, welche verglichen mit dem aus dem Stand der Technik bekannten Verfahren wesentlich weniger Bauraum in der Höhe beansprucht, was vorteilhaft zu einer größeren Kopffreiheit des Fahrers und seiner Fahrgäste führt.

Ein weiterer Vorteil der bereits werkseitigen Ausgestaltung der erfindungsgemäßen Kraftfahrzeugkarosserie mit einem Adapterträger besteht darin, dass auch die Einrichtungen zur Abdichtung des Fahrzeuginneren gegen am Rand des Dachmoduls eintretende Nässe, Schmutz oder dergleichen zielgerichteter, problemstellenorientierter, kostengünstiger und mit geringerem Herstellungs- sowie Zeitaufwand ausgestaltet werden können, als es beim herkömmlichen Vorgehen der Fall ist.

Ferner sind die in den Adapterträger der erfindungsgemäßen Kraftfahrzeugkarosserie eingesetzten Dachmodule vorteilhaft geringeren mechanischen Anforderungen ausgesetzt. Dies rührt daher, dass ein in den Adapterträger eingesetztes Dachmodul geringeren Schwingungen und Verwindungs- bzw. Torsionskräften beim Fahrbetrieb des Fahrzeugs ausgesetzt ist, da seine stabile Anbindung in den wiederum stabil am dachtragenden Fahrzeugrahmen befestigten Adapterträger weniger großen Schwingungen und Verwindungen ausgesetzt ist als das herkömmlich befestigte Dachmodul.

Dies führt wiederum in vorteilhafter Weise dazu, dass in den Adapterträger eingesetzte Dachmodule unter weiterer Einsparung von Höhenbauraum in die Fahrzeugkarosserie integriert werden können, wobei zugleich eine randseitige Anbindung wesentlich schlanker bzw. platzsparender ausfallen kann, was letztendlich vorteilhaft in einem wesentlich geringeren Verbrauch an für andere Zwecke nutzbarer Fläche und einem erhöhten Innenraumvolumen der Fahrgastzelle im Bereich der Köpfe des Fahrers bzw. der Fahrgäste resultiert.

Die Montage des Adapterträgers an der erfindungsgemäßen Kraftfahrzeugkarosserie gestaltet sich besonders einfach, wenn der Adapterträger auf einem Auflageflansch der Strukturbauteile befestigt ist.

Die erfindungsgemäße Kraftfahrzeugkarosserie weist eine besonders hohe Stabilität auf, wenn die Strukturbauteile und der Adapterträger zusammen eine Hohlkammer begrenzen.

Die erfindungsgemäße Kraftfahrzeugkarosserie hat eine besonders hohe Stabilität, wenn der Adapterträger mehrere gleiche Säulen miteinander verbindet.

Die erfindungsgemäße Aufgabe wird ebenfalls durch einen Adapterträger gelöst, welcher für einen Einbau in eine erfindungsgemäße Kraftfahrzeugkarosserie - wie vorstehend beschrieben - geeignet ist. Bei diesem Adapterträger handelt es sich um eine tragende Struktur, bei deren Einsatz auf die oben beschriebene Weise in einer erfindungsgemäßen Kraftfahrzeugkarosserie sich alle oben genannten Vorteile in synergetischer Weise ungeschmälert erzielen lassen.

Vorteilhafte Weiterbildungen des erfindungsgemäßen Adapterträgers sind Gegenstand der jeweiligen Unteransprüche.

In einer bevorzugten Ausführungsform ist der Adapterträger im Wesentlichen als Rahmenstruktur ausgestaltet.

Die Ausgestaltung des Adapterträgers als Rahmenstruktur ist dahingehend vorteilhaft, dass der Adapterträger aufgrund seiner Rahmenstruktur eine erhöhte Stabilität und verbesserte Steifigkeit gegenüber einem zusammengesetzten Adapterträger aufweist, welche einerseits der Befestigung des Dachmoduls im Dachträger bzw. am Fahrzeug und andererseits der Sicherheit des Fahrzeugs selber in dessen Dachbereich förderlich ist. Zudem kann mit einem als Rahmenstruktur ausgebildeten Adapterträger die Steifigkeit der Fahrgastzelle zusätzlich erhöht und damit eine verbesserte Sicherheit für die Fahrgäste erreicht werden.

Der Adapterträger kann in einer weiter bevorzugten Ausführungsform vorteilhafterweise einstückig ausgestaltet sein, was seine Herstellung auf vergleichsweise einfache und somit kostengünstige Art und Weise ermöglicht. Ferner wird bei dieser Ausführungsform die Anzahl benötigter Bauteile vorteilhaft auf ihre minimal erforderliche Anzahl verringert, was zur Senkung des erforderlichen Lager-, Herstell- und Kostenaufwandes führt. Ein weiterer Vorteil dieser bevorzugten Ausführungsform besteht darin, dass durch das Wegfallen eventueller Verbindungen und hierfür notwendiger Befestigungsmittel zwischen einzelnen Rahmenteilen eine besonders einfache, passgenaue, maßhaltige und kostengünstige Herstellung möglich ist.

Ein einfacher Toleranzausgleich des Adapterträgers gegenüber der Strukturbauteile der Kraftfahrzeugkarosserie lässt sich gemäß einer vorteilhaften Weiterbildung der Erfindung erzeugen, wenn er mehrere Schließbleche aufweist und wenn die Schließbleche Flansche zur Befestigung auf dem Auflageflansch aufweisen. Weiterhin wird hierdurch ein Verschnitt bei der Fertigung des Adapterträgers gering gehalten, da eine Öffnung in den Adapterträger durch ein Zusammenstellen der Schließbleche erzeugt wird. Die Zusammenstellung des Adapterträgers aus einzelnen Schließblechen hat zudem den Vorteil, dass der Adapterträger bei der Montage besonders einfach zu handhaben ist. Im Vergleich zu dem einstückigen Adapterträger haben die Schließbleche zudem eine hohe Stabilität gegen einen Verzug und lassen sich einfach transportieren. Der die Schließbleche aufweisende Adapterträger lässt sich daher besonders kostengünstig fertigen und einfach transportieren und montieren.

Zur weiteren Vereinfachung des Adapterträgers trägt es gemäß einer anderen vorteilhaften Weiterbildung der Erfindung bei, wenn die Schließbleche eine gerade, langgestreckte Form aufweisen und jeweils mit einem der Strukturbauteile verbunden sind.

Winkelstücke und dergleichen zur Erzeugung des Adapterträgers lassen sich gemäß einer anderen vorteilhaften Weiterbildung der Erfindung vermeiden, wenn die Schließbleche rahmenförmig zueinander angeordnet sind. Hierdurch lässt sich beispielsweise der zur Aufnahme des Dachfensters vorgesehene Adapterträger aus vier geraden Schließblechen zusammenstellen.

In einer weiter bevorzugten erfindungsgemäßen Ausführungsform ist der Adapterträger mit dem Kraftfahrzeug mittels Schweißen, Kleben oder Druckfügen verbunden.

Diese Ausführungsform zeichnet sich durch das besonders einfache, mit geringem Herstellaufwand verbundene Anfügen des einzusetzenden Dachmoduls in den Adapterträger aus. So bedeutet es keinen besonderen Aufwand, bei der Fahrzeugmontage ein automatisiertes Einsetzen des Adapterträgers in den dachtragenden Rahmen des Kraftfahrzeugs und ein anschließendes, ebenfalls automatisiertes Verschweißen oder Verkleben des Adapterträgers mit dem dachtragenden Rahmen ausführen zu lassen. Ein weiterer Vorteil der Verbindung des Adapterträgers mit dem Kraftfahrzeug liegt darin, dass ein späteres Heraustrennen des Adapterträgers beispielsweise nach Beschädigungen des Fahrzeugdaches oder dergleichen auf vergleichsweise einfache Art und Weise durchgeführt werden kann.

Ferner kann das Schweißen durch Schweißautomaten am laufenden Produktionsband durchgeführt werden. Damit ist in vorteilhafter Weise eine Integration der dabei erforderlichen Arbeitsschritte in den laufenden Produktionsprozess unter Ausnutzung entsprechender Einsparungspotentiale möglich.

Des Weiteren weist das Verschweißen des Adapterträgers mit dem Kraftfahrzeug alle Vorteile auf, die dem Fachmann vom Einsatz des Schweißens als Fügeverfahren, wie beispielsweise Temperaturausdehnung der Schweißnähte bezogen auf das Wärmeverhalten der verschweißten Bauteile und Wasserdichtigkeit, bekannt sind. Jedoch ist die Erfindung nicht auf die oben diskutierte Schweißverbindung beschränkt. Auch ein Verkleben des Adapterträgers mit der Karosserie ist ebenso wie jedes andere, vom Fachmann bevorzugte Verfahren möglich.

Eine weitere bevorzugte Ausführungsform des erfindungsgemäßen Adapterträgers ist dadurch gekennzeichnet, dass er Befestigungsvorrichtungen für Dachfenster, Schiebedächer, Hebedächer, Dachöffnungssysteme und/oder Dachmodulvarianten (kurz: Dachmodul) aufweist, welche derart ausgestaltet sind, dass das jeweils in den Adapterträger eingefügte Dachmodul gegen ein anderes Dachmodul auswechselbar ist.

Ein Vorteil dieser Ausführungsform besteht darin, dass sich der Käufer eines Kraftfahrzeugs nicht bereits zum Zeitpunkt des Kaufes seines Kraftfahrzeuges festlegen muss, mit welcher Dachausgestaltung seines Fahrzeugs er in den nächsten Jahren unterwegs sein möchte. Es ist mit dieser Ausführungsform somit vorteilhaft möglich, ein einmal gewähltes Dachmodul ohne besonderen Aufwand gegen ein anderes auszuwechseln. Mit der so gewonnenen, bislang unbekannten Flexibilität lassen sich bereits gewonnen Kunden besser an die eigene Marke binden und darüber hinaus neue Kunden leichter gewinnen.

Hierzu können beispielsweise Schraubverbindungen, Hebelmechanismen oder auch Klebeverbindungen zwischen Adapterträger und Dachmodul verwendet werden, die ein Austauschen ohne besonderen Montage- oder Handhabungsaufwand ermöglichen.

Der Besitzer eines mit einem erfindungsgemäßen Adapterträger ausgestatteten Fahrzeugs kann somit beispielsweise nach einem Umzug in eine sonnigere bzw. wärmere Gegend ein einfaches Sonnendach gegen ein großflächig, weit zu öffnendes Dachöffnungssystem austauschen. Ferner ist es möglich, mittels geeigneter, einfach zu lösender Befestigungsvorrichtungen für das Dachmodul im Adapterträger Dachmodule auch im jahreszeitlichen Wechsel gegeneinander auszutauschen. Vorstellbar ist in diesem Zusammenhang, dass beispielsweise im Sommer das zu öffnende Dachmodul und im Winter das großflächige, mit einer Abtauvorrichtung versehene Licht- bzw. Sonnendach verwendet wird.

Die Austauschbarkeit des Dachmoduls beim Adapterträger der vorliegenden Ausführungsform ist auch dann von Vorteil, wenn ein beschädigtes Dachmodul anstelle einer aufwändigeren Reparatur mit geringerem Zeit- und Kostenaufwand gegen ein neues Modul ausgetauscht werden soll.

Eine weiter bevorzugte Ausführungsform sieht vor, dass der oben offene mittlere Bereich des erfindungsgemäßen Adapterträgers durch Einsetzen und entsprechendes Befestigen eines Blechdachs verschließbar ist.

Wie schon bei der Diskussion der Austauschbarkeit einzelner Dachmodule gegeneinander diskutiert wurde, besteht auch bei dieser Ausführungsform der Vorteil, beispielsweise beim Kauf eines Fahrzeugs mit einem ungleich kostengünstigeren, in den am Fahrzeug vorgesehenen Adapterträger eingesetzten herkömmlichen Blechdach Vorlieb zu nehmen, und erst nach Ablauf einiger Zeit das Fahrzeug durch Austauschen des im Adapterträger befestigten, einfachen Blechdachs gegen ein aufwändigeres Dachmodul aufzuwerten.

Ferner erlaubt die Möglichkeit, den erfindungsgemäßen Adapterträger dieser Ausführungsform mittels eines Blechdachs zu verschließen vorteilhaft, dass bei der Herstellung eines Fahrzeugtyps noch keinerlei Unterscheidung dahingehend getroffen werden muss, ob eine Fahrzeugkarosserie bei ihrem Herstellungsprozess für den Anschluss eines Adapterträgers oder aber eines einfachen Blechdaches vorzubereiten ist. Die Möglichkeit, eine einmal mit einem Adapterträger ausgestattete Fahrzeugkarosserie wahlweise ohne weiteren Aufwand in ihrem Dachbereich mit einem Blechdach zu verschließen oder aber mit einem Dachmodul auszustatten, erlaubt vorteilhaft eine Reduzierung der Teilevielfalt bei der Fahrzeugherstellung und der Herstellung seiner einzelnen Fahrzeugtypen (gleichgültig, ob es für ein Dachmodul vorgesehen ist oder nicht) sowie den Einsatz einer geringeren Anzahl an Werkzeugen.

Die erfindungsgemäße Aufgabe wird ferner durch ein Verfahren zum Herstellen einer erfindungsgemäßen Kraftfahrzeugkarosserie gelöst, welches den Schritt des Verbindens einer Kraftfahrzeugkarosserie mit einem erfindungsgemäßen Adapterträger umfasst.

Alle oben stehend diskutierten Ansprüche werden mittels des erfindungsgemäßen Verfahrens in synergetischer Weise ungeschmälert erzielt, so dass diesbezüglich auf die vorstehende Diskussion verwiesen wird.

Der Adapterträger vermag zur Versteifung der Kraftfahrzeugkarosserie beitragen, indem ein Schließblech zwei parallele Säulen verbindet, wenn zunächst eines der quer zur Fahrzeuglängsrichtung anzuordnenden Schließbleche mit dem jeweiligen Strukturbauteil verbunden wird und anschließend die in Fahrzeuglängsrichtung weisenden Schließbleche auf den in Fahrzeuglängsrichtung weisenden Strukturbauteilen und mit einer Überlappung auf dem quer zur Fahrzeuglängsrichtung angeordneten Schließblech befestigt werden. Damit hat das quer zur Fahrzeuglängsrichtung angeordnete Schließblech unmittelbar Kontakt zur Kraftfahrzeugkarosserie.

Zur weiteren Erhöhung der Stabilität der Kraftfahrzeugkarosserie trägt es bei, wenn ein zweites der quer zu der Fahrzeuglängsrichtung und in der Verbindung einander gegenüberstehenden Säulen anzuordnendes Schließblech mit den in Fahrzeuglängsrichtung weisenden Strukturbauteilen überlappt wird.

Die vorliegende Erfindung wird unter Bezugnahme auf zwei beispielhafte Ausführungsformen anhand der nachfolgend diskutierten Zeichnung näher erläutert. In der Zeichnung gilt:
- Fig. 1: zeigt schematisch vereinfacht ein herkömmliches Blechdach mit einer Dachöffnung zum Aufnehmen eines herkömmlichen Dachmoduls in einer perspektivischen Draufsicht;
- Fig. 2: zeigt einen erfindungsgemäßen Adapterträger in einer schematisch vereinfachten perspektivischen Draufsicht;
- Fig. 3: zeigt in einer schematisch vereinfachten perspektivischen Ansicht von oben den erfindungsgemäßen Adapterträger während seines Anfügens in eine Fahrzeugkarosserie;
- Fig. 4a: zeigt einen Schnitt durch den erfindungsgemäßen Adapterträger im eingebauten Zustand entlang der in Fig. 2 gezeigten Linie I-I in schematisch vereinfachter Darstellung;
- Fig. 4b: zeigt einen Schnitt durch das herkömmliche Fahrzeugdach entlang der in Fig. 1 gezeigten Schnittlinie Ib-Ib, wiederum in schematisch vereinfachter Darstellung;
- Fig. 5a: zeigt einen Schnitt durch den erfindungsgemäßen Adapterträger im eingebauten Zustand entlang der in Fig. 2 gezeigten Linie II-II, erneut in schematisch vereinfachter Darstellung;
- Fig. 5b: zeigt einen Schnitt durch das herkömmliche Fahrzeugdach entlang der in Fig. 1 gezeigten Linie IIb-IIb, abermals in schematisch vereinfachter Darstellung;
- Fig. 6a: zeigt einen Schnitt durch den erfindungsgemäßen Adapterträger im eingebauten Zustand entlang der in Fig. 2 gezeigten Linie III-III in schematisch vereinfachter Darstellung; und
- Fig. 6b: zeigt einen Schnitt durch das herkömmliche Fahrzeugdach entlang der in Fig. 1 gezeigten Linie IIIb-IIIb in schematisch vereinfachter Darstellung,
- Fig. 7: zeigt eine weitere Ausführungsform der Kraftfahrzeugkarosserie mit einem aus Schließblechen zusammengesetzten Adapterträger,
- Fig. 8: zeigt eine Schnittdarstellung durch die Kraftfahrzeugkarosserie entlang der Linie VIII-VIII aus Figur 7,
- Fig. 9: zeigt eine Schnittdarstellung durch die Kraftfahrzeugkarosserie entlang der Linie IX-IX aus Figur 7,
- Fig. 10: zeigt eine Schnittdarstellung durch die Kraftfahrzeugkarosserie entlang der Linie X-X aus Figur 7,
- Fig. 11: zeigt stark vergrößert einen Überlappungsbereich zweier Schließbleche des Adapterträgers aus Figur 7.

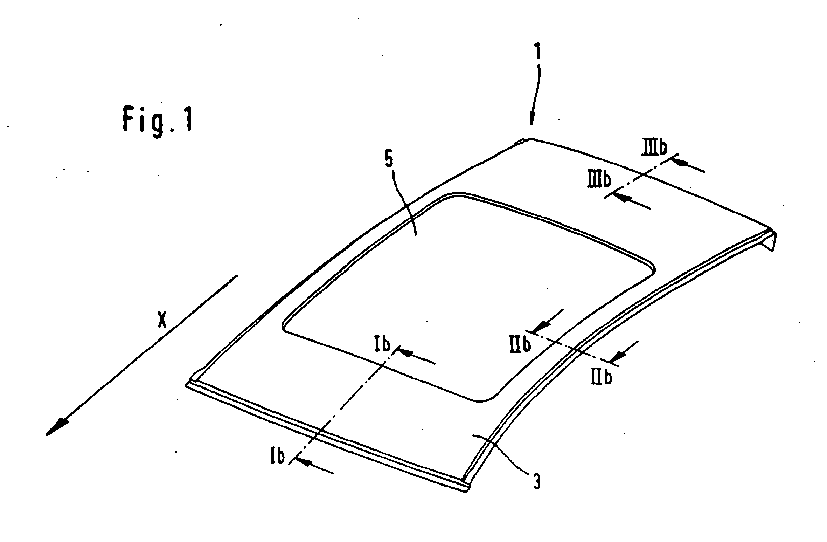

Ein in Fig. 1 gezeigtes, herkömmliches Fahrzeugdach 1, weist eine Dachhaut 3 und eine Öffnung 5 für ein Dachmodul auf. Die Fahrzeuglängsrichtung des zugehörigen Kraftfahrzeugs (letzteres nicht näher dargestellt) ist mit X angegeben. In Fig. 1 sind drei Schnitte Ib-Ib, IIb-IIb und IIIb-IIIb mittels Schnittlinien angedeutet, wobei die an den Linien dargestellten Pfeile die Blickrichtung auf die jeweilige Schnittfläche angeben. Die angedeuteten Schnitte werden untenstehend in den nachfolgenden Figuren ausführlich diskutiert.

Das in Fig. 1 gezeigte Fahrzeugdach 1 liegt in einem Zustand vor, in welchem in der Dachhaut 3 bereits eine entsprechende Öffnung 5 für ein Dachmodul vorgesehen, jedoch noch kein Dachmodul in dieser befestigt ist. Gut zu erkennen ist in Fig. 1, dass es sich bei der Dachhaut 3 um ein dünnes herkömmliches Fahrzeugdachblech handelt, welches in der hier gezeigten beispielhaften Ausführungsform in seinem mittleren Bereich durch keine weiteren Stütz- bzw. Dachstrukturelemente verstärkt ist.

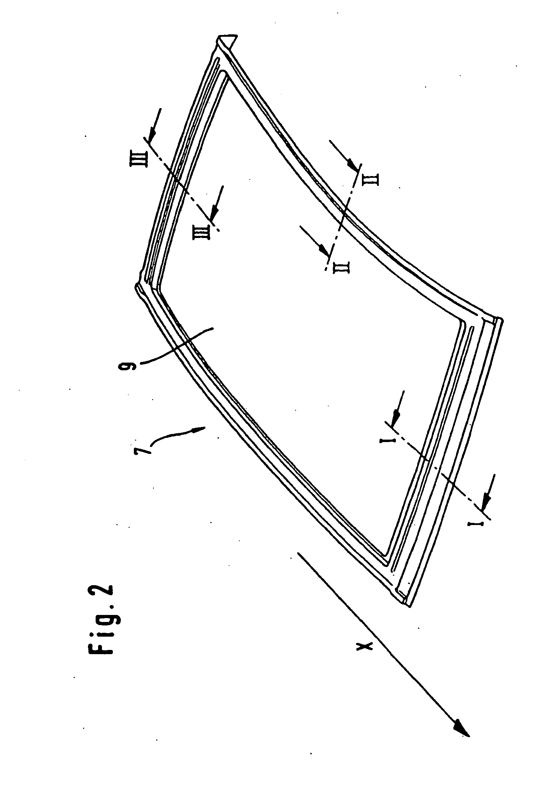

In Fig. 2 bezeichnen Bezugszeichen, wie sie bereits in Fig. 1 verwandt wurden, die gleichen bzw. gleichwirkende Bauteile, wie sie mit den selben Bezugszeichen auch in Fig. 1 bezeichnet sind. Dies gilt über die Fig. 1 und 2 hinaus auch für die weiteren Figuren; ein einmal vergebenes Bezugszeichen kennzeichnet in allen Figuren dieser Zeichnung jeweils das gleiche Bauteil.

Die Fig. 2 zeigt eine beispielhafte Ausführungsform eines erfindungsgemäßen Adapterträgers 7 mit einer Öffnung 9 für ein Dachmodul im mittleren Bereich des Adapterträgers 7. Der Adapterträger 7 der vorliegenden Ausführungsform ist als einstückiges Rahmenelement ausgestaltet, welches dazu geeignet ist, auf eine dachtragende Rahmenstruktur (hier nicht näher dargestellt) des entsprechenden Kraftfahrzeuges (ebenfalls nicht näher dargestellt) passgenau aufgesetzt zu werden, um mit diesem verschweißt zu werden.

In Fig. 2 sind - vergleichbar mit der aus Fig. 1 vorstehend bekannten Vorgehensweise - drei Schnitte I-I, II-II und III-III mit der jeweils durch Pfeile gekennzeichneten Blickrichtung auf die Schnittflächen gelegt; die Schnitte werden untenstehend in den nachfolgenden Figuren detailliert erläutert.

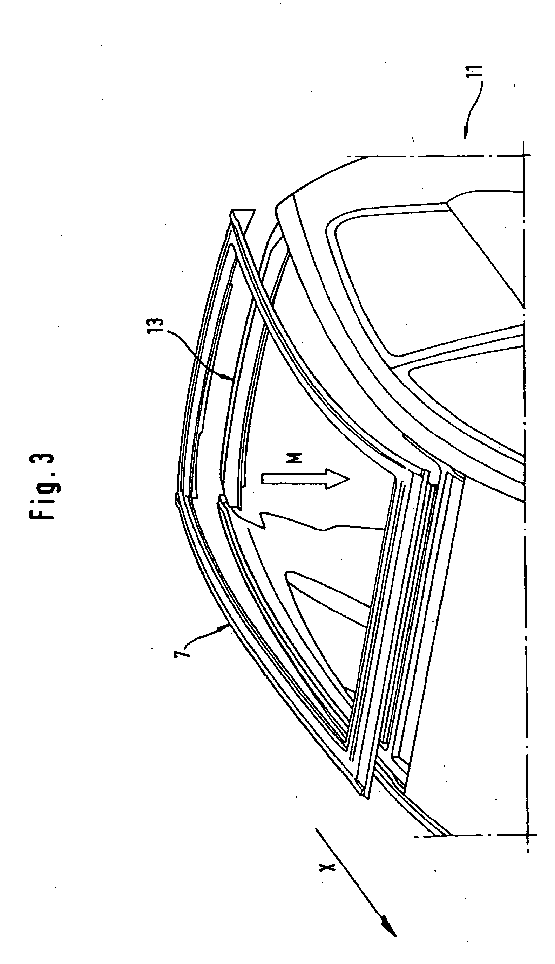

Fig. 3 zeigt schemenhaft dargestellt den oberen Karosserieabschnitt eines Kraftfahrzeugs 11 im Moment der Montage bzw. des Anfügens eines erfindungsgemäßen Adapterträgers 7 auf einen in Fig. 3 gut zu erkennenden dachtragenden Rahmen 13. Der Pfeil M gibt an, dass der Adapterträger 7 von oben herab auf den dachtragenden Rahmen 13 aufgesetzt wird. Nach dem passgenauen Anordnen des Adapterträgers 7 kann er mit dem dachtragenden Rahmen 13 beispielsweise verschweißt werden.

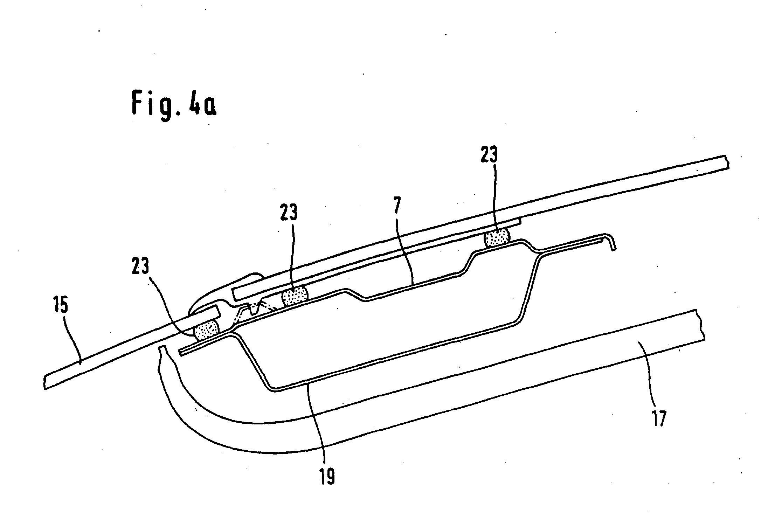

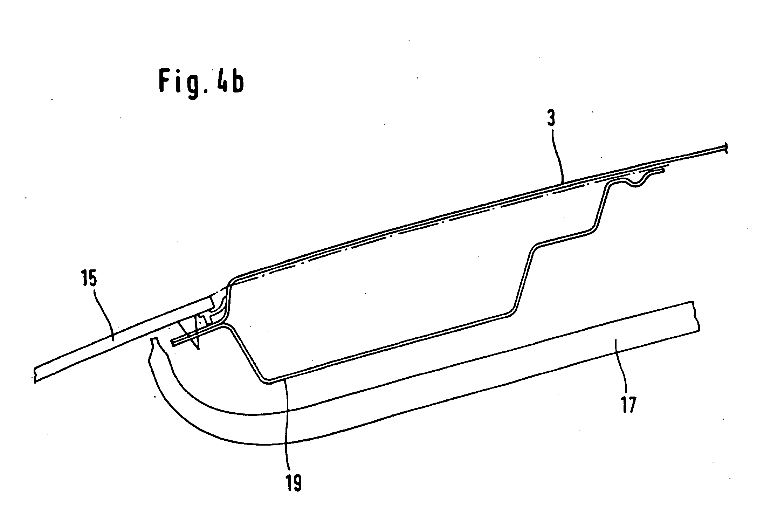

Fig. 4a zeigt in schematisch vereinfachter Form einen Blick auf die Schnittfläche des in Fig. 2 entlang der Linie I-I angedeuteten Schnitts gemäß der in Fig. 2 dargestellten Pfeile. Zum besseren Verständnis des in Fig. 4a Dargestellten empfiehlt es sich, bei der Betrachtung der Fig. 4a zugleich auch die Fig. 4b zur Hand zu nehmen. Fig. 4a zeigt einen Schnitt durch den erfindungsgemäßen Adapterträger 7 im Frontbereich des Fahrzeugdachs, eine Frontschutzscheibe 15, ein Verkleidungselement 17, ein Dachstrukturelement 19 sowie ein in den Adapterträger 7 eingelegtes Glasdach bzw. -scheibe 21 sowie Klebstoffmassen 23, mittels welcher das Glasdach 21 mit dem Adapterträger 7 bzw. der Adapterträger 7 und/oder das Dachstrukturelement 19 mit der Frontschutzscheibe 15 verklebt ist.

Fig. 4b stellt hingegen die herkömmliche Ausgestaltung eines Fahrzeugs mit der Dachhaut 3 und ohne Adapterträger dar. Gut zu erkennen ist im Vergleich der beiden Fig. 4a und 4b, dass es sich beim Adapterträger 7 in Fig. 4a um einen in dieser Ausführungsform einstückigen Adapterträger 7 handelt, soweit er in dem in Fig. 4a dargestellten Schnitt gezeigt ist.

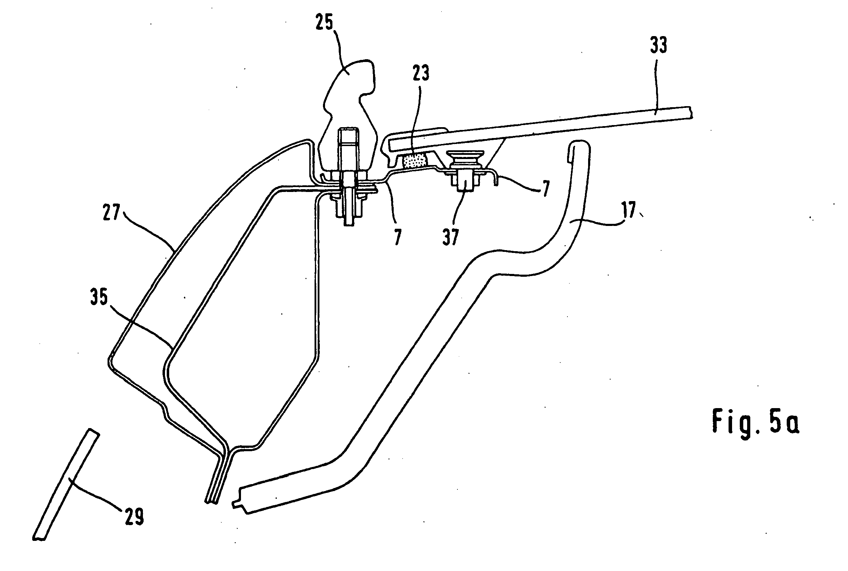

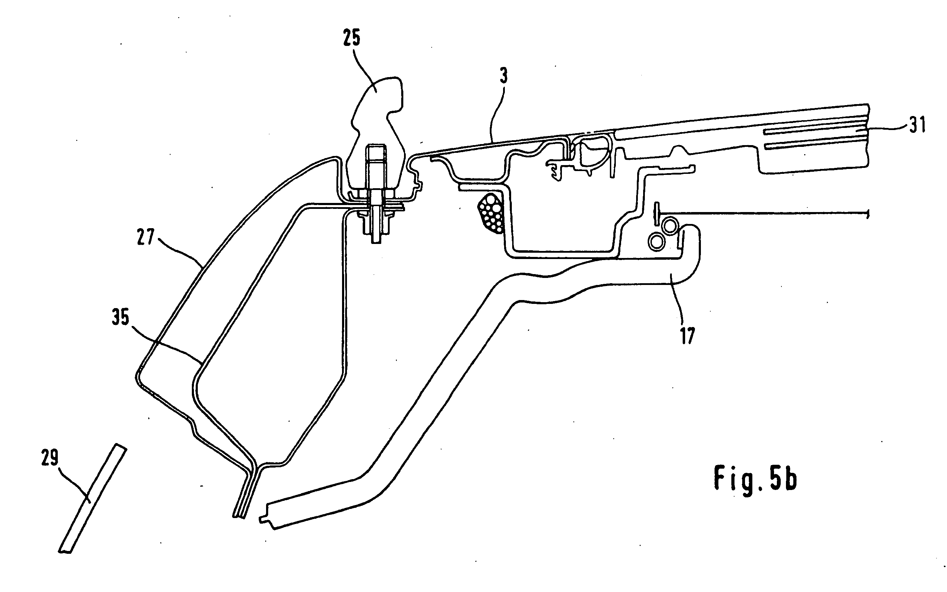

Die Fig. 5a stellt einen Blick auf die schematisch vereinfacht wiedergegebene Schnittfläche II-II aus Fig. 2, die Fig. 5b einen Blick auf die vereinfacht dargestellte Schnittfläche entlang des Schnittes IIb-IIb aus Fig. 1 dar. Wie zuvor bereits bei den Fig. 4a und 4b erlaubt der Vergleich der Fig. 5a mit der Fig. 5b, die Gestalt des Adapterträgers 7 leichter zu erfassen.

In den Fig. 5a und 5b sind eine Dachreling 25, eine seitliche Fahrzeughaut 27 und ein Seitenfenster 29 im Anschnitt dargestellt, welche nicht bereits aus den zuvor diskutierten Figuren bekannt sind. Fig. 5b zeigt sehr anschaulich, dass ein ebenfalls dargestelltes Dachöffnungsmodul 31 an der Dachhaut 3 abgestützt ist, ferner wird die beachtliche, benötigte Einbautiefe des Dachöffnungsmoduls 31 und die damit verbundene Beschränkung der Kopffreiheit des Fahrers bzw. der Fahrgäste erkennbar.

Fig. 5a hingegen zeigt ein Dachfenster 33, welches stabil und anders als im Stand der Technik nicht an der Dachhaut 3 (in Fig. 5a nicht dargestellt und im vorliegenden Schnitt der dargestellten Ausführungsform auch nicht angeschnitten), sondern am stabileren Adapterträger 7 abgestützt ist, welcher seinerseits eine Abstützung an einem seitlichen Dachstrukturelement 35 des Kraftfahrzeugs findet. Das Dachfenster 33 ist in Abbildung 5a wiederum mit einer Klebstoffmasse 23 am Adapterträger 7 befestigt, zusätzlich ist in der dargestellten Ausführungsform eine alternative Befestigungsmöglichkeit des Dachfensters 33 am Adapterträger 7 mittels einer Verschraubung 37 dargestellt.

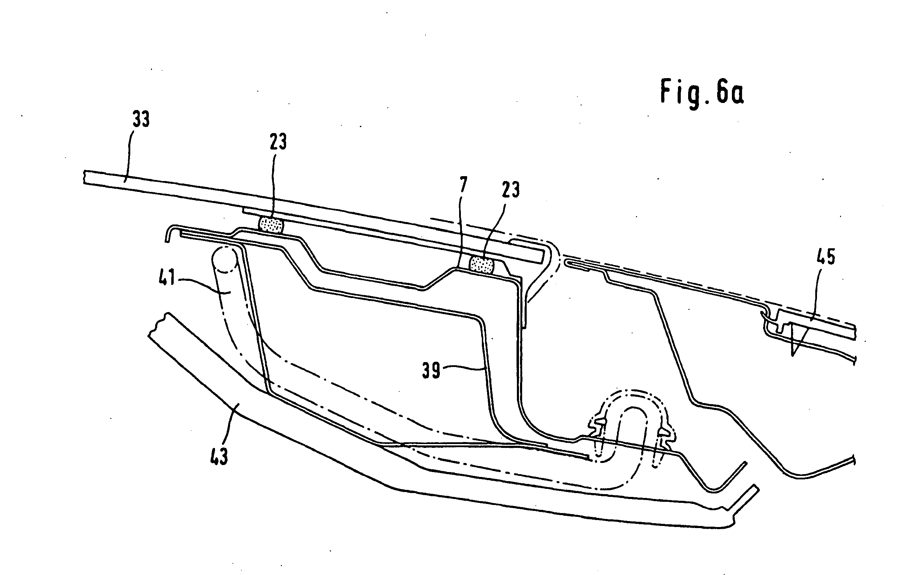

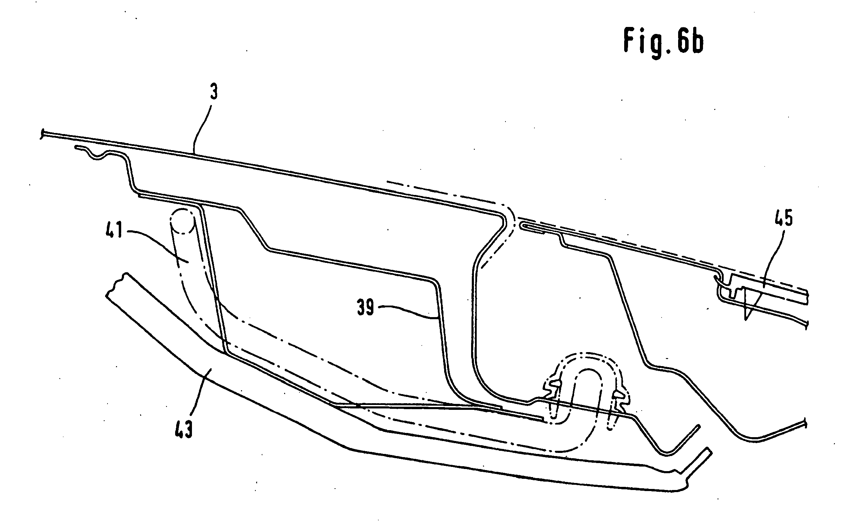

Die Fig. 6a stellt einen Blick auf die schematisch vereinfacht wiedergegebene Schnittfläche III-III aus Fig. 2, die Fig. 6b einen Blick auf die vereinfacht dargestellte Schnittfläche entlang des Schnittes IIIb-IIIb aus Fig. 1 dar. Wie zuvor bereits bei den Fig. 4a und 4b sowie den Fig. 5a und 5b erlaubt der Vergleich der Fig. 6a mit der Fig. 6b, die Gestalt des Adapterträgers 7 leichter zu erkennen.

In den Fig. 6a und 6b sind wiederum jeweils ein hinteres Dachstrukturelement 39 sowie zwei Verkleidungselemente 41, 43 dargestellt. Ferner zeigt sowohl die herkömmliche Gestaltung der Fig. 6b als auch die erfindungsgemäße Ausführungsform der Fig. 6a einen in beiden Fig. 6a und 6b gleich aufgebauten Fahrzeugdachanschlussbereich 45.

Wie insbesondere in den Fig. 4a, 4b, 5a, 5b, 6a und 6b und insbesondere in der gemeinsamen Betrachtung jeweils der Fig. 4a, 4b bzw. 5a, 5b und 6a, 6b gut zu erkennen ist, ist ein Einsetzen eines erfindungsgemäßen Adapterträgers in eine konventionelle Karosserie nahezu ohne hierzu erforderlichen Aufwand möglich. So bedarf es in der in den Figuren dargestellten Ausführungsform keiner besonderen Anpassung der Kraftfahrzeugkarosserie für die Aufnahme des Adapterträgers. Lediglich die in den Schnitten Ib-Ib und IIIb-IIIb dargestellten Dachhautabstützungen sollten entsprechend gekürzt bzw. beschnitten werden, um einen erfindungsgemäßen Adapterträger möglichst optimal in die Karosserie einsetzen zu können. Ein solcher Beschnitt bzw. eine derartige Einkürzung ist jedoch ohne nennenswerten Aufwand automatisiert durchführbar. Darüber hinaus kann selbst dieser Arbeitsschritt durch eine einfache konstruktive Umgestaltung der Karosserie letztlich zur Gänze entfallen. Somit eignet sich der erfindungsgemäße Adapterträger, um ohne nennenswerten Arbeits- oder konstruktiven Aufwand oder gar zu Buche schlagender Kosten auf eine herkömmliche Kraftfahrzeugkarosserie aufgesetzt und mit dieser befestigt zu werden.

Selbst die bekannten und bereits bewährten Einbausequenzen für Halter, Haltegriffe, Dachreling, Headcurtaineinbau, Fangnetzanbindung vorn und hinten und dergleichen mehr können im Vergleich zwischen konventionellem Blechdach und dem Einsatz eines erfindungsgemäßen Adapterträgers identisch bleiben.

Somit schlägt die vorliegende Erfindung erstmals eine Kraftfahrzeugkarosserie mit einem dachtragenden Rahmen, auf welchen ein Adapterträger zum Aufnehmen von Dachfenstern, Schiebedächern, Dachöffnungssystemen und/Dachmodulvarianten aufgesetzt und befestigt ist, und einen für den Einbau in eine erfindungsgemäße Kraftfahrzeugkarosserie geeigneten Adapterträger vor. Die Erfindung gibt ferner ein entsprechendes Herstellungsverfahren an.

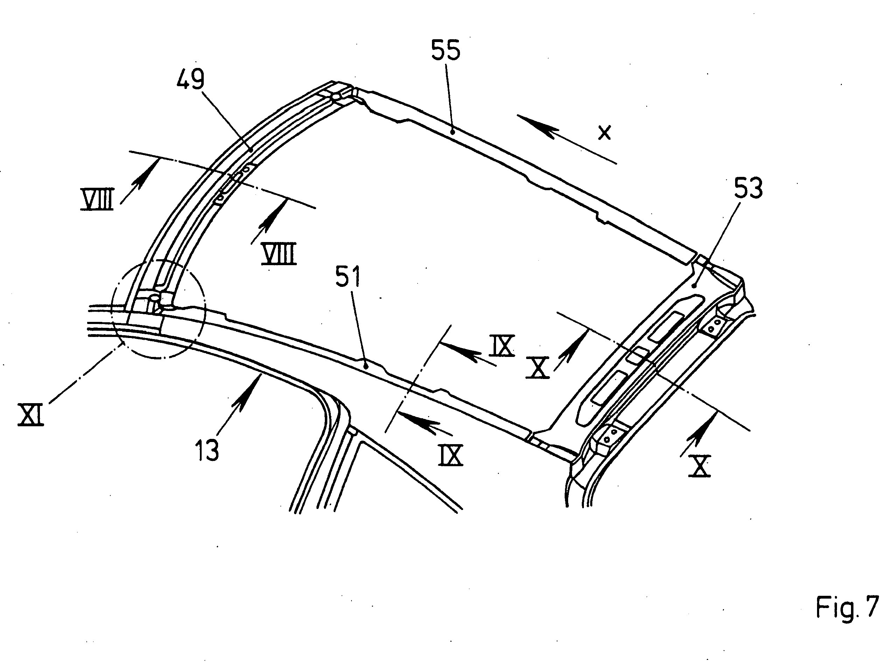

Figur 7 zeigt eine weitere Ausführungsform der Kraftfahrzeugkarosserie mit einem auf dem dachtragenden Rahmen 13 befestigten Adapterträger 47. Im Gegensatz zu dem Adapterträger 7 aus den vorangegangenen Figuren setzt sich der in Figur 7 und den folgenden Figuren dargestellte Adapterträger 47 aus vier einzelnen Schließblechen 49, 51, 53, 55 zusammen.

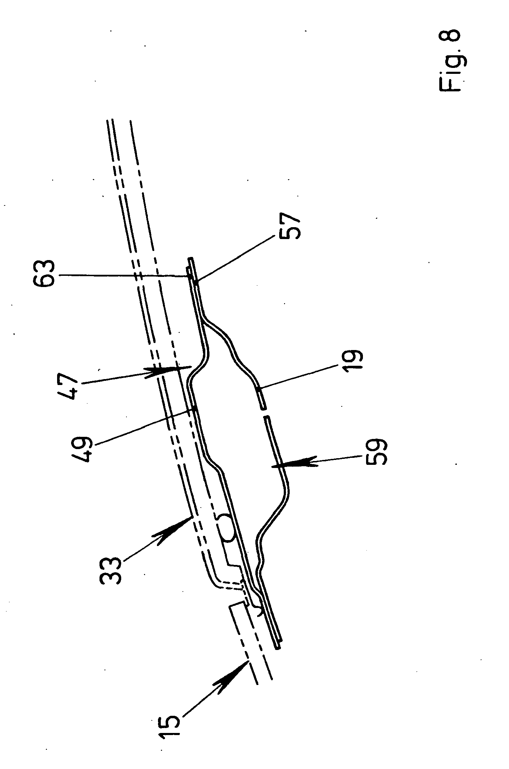

Figur 8 zeigt in einer Schnittdarstellung entlang der Linie VIII-VIII den Adapterträger 47 aus Figur 7 mit angrenzenden Bereichen der Kraftfahrzeugkarosserie. Diese Schnittdarstellung entspricht dem Schnitt aus Figur 4a der ersten Ausführungsform. Hierbei ist zu erkennen, dass das Schließblech 49 des Adapterträgers 47 mit einem Flansch 63 unmittelbar auf einem Auflageflansch 57 des Strukturelements 19 befestigt ist und mit dem Strukturelement 19 eine Hohlkammer 59 bildet.

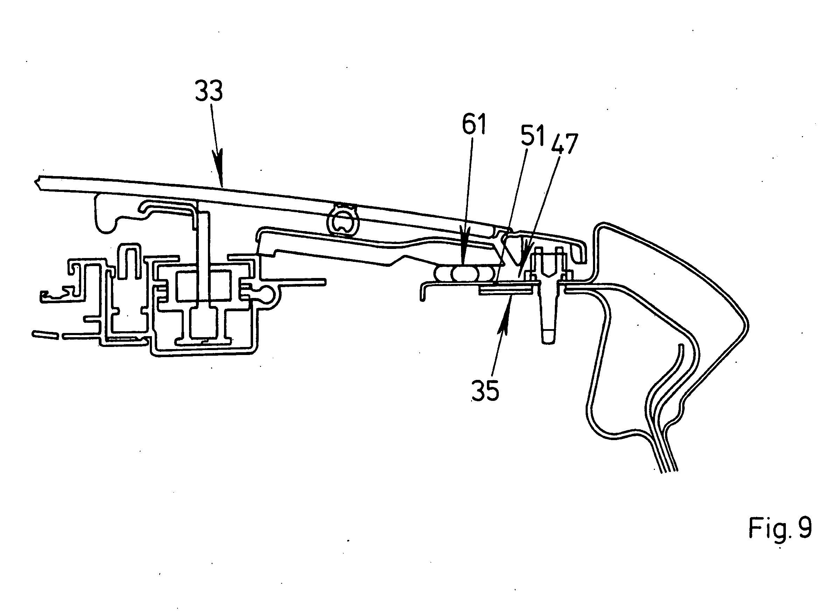

Figur 9 zeigt in einer Schnittdarstellung entlang der Linie IV-IV durch den Adapterräger 47 aus Figur 7 die Befestigung eines der in Fahrzeuglängsrichtung weisenden Schließblechs 51 auf dem entsprechenden Strukturelement 35. Wie bei der in Figur 5a dargestellten Ausführungsform liegt das Dachfenster 33 auf einer auf dem Adapterträger 47 angeordneten Klebstoffmasse 61 auf.

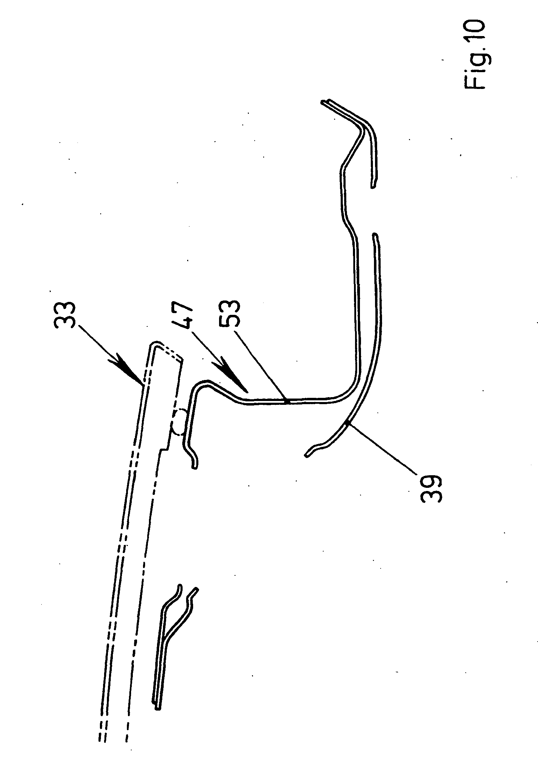

Figur 10 zeigt in einer Schnittdarstellung entlang der Linie X-X durch den Adapterträger 47 aus Figur 7 die Befestigung eines der Schließbleche 53 an dem entsprechenden Dachstrukturelement 39. Diese Schnittdarstellung entspricht der aus Figur 6a der ersten Ausführungsform. Auch hier liegt das Dachfenster 33 auf der Klebstoffmasse 761 auf.

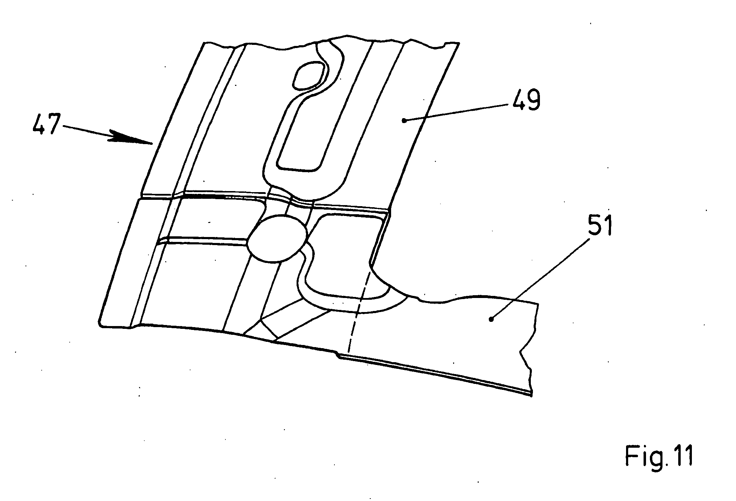

Figur 11 zeigt stark vergrößert die Anbindung zweier aneinander grenzender Schließbleche 49, 51 des Adapterträgers 47 aus Figur 7. Hierbei ist zu erkennen, dass das in Fahrtrichtung weisende Schließblech 51 überlappend auf das quer zur Fahrzeuglängsrichtung weisende Schließblech 49 angeordnet ist.

### Bezugszeichenliste

- 1: Fahrzeugdach
- 3: Dachhaut
- 5: Öffnung für ein Dachmodul
- 7: Adapterträger
- 9: Öffnung für ein Dachmodul
- 11: Kraftfahrzeug
- 13: Dachtragender Rahmen
- 15: Frontschutzscheibe
- 17: Verkleidungselement
- 19: Dachstrukturelement
- 21: Glasdach
- 23: Klebstoffmassen
- 25: Dachreling
- 27: Seitliche Fahrzeughaut
- 29: Seitenfenster
- 31: Dachöffnungsmodul
- 33: Dachfenster
- 35: Dachstrukturelement
- 37: Verschraubung
- 39: Dachstrukturelement
- 41: Verkleidungselement
- 43: Verkleidungselement
- 45: Fahrzeugdachanschlussbereich
- 47: Adapterträger
- 49, 51,: Schließblech
- 53, 55: Schließblech
- 57: Auflageflansch
- 59: Hohlkammer
- 61: Klebstoffmasse
- 63: Flansch

## Patentansprüche

1. Kraftfahrzeugkarosserie (11) mit wenigstens zwei Paar Säulen, welche mittels zweier sich in Kraftfahrzeuglängsrichtung erstreckender Strukturbau teile (35) sowie zweier sich in Fahrzeugquerrichtung erstreckender Strukturbauteile (19) zu einem dachtragenden Rahmen (13) miteinander verbunden sind, wobei ein Adapterträger (7, 47) auf diesen dachtragenden Rahmen (13) aufgesetzt und mit diesem befestigt ist, zum Aufnehmen von Dachfenstern (33), Schiebedächern, Dachöffnungssystemen und/oder Dachmodulvarianten in diesen Adapterträger (7), **dadurch gekennzeichnet, dass** der Adapterträger (7, 47) an wenigstens einem der sich in Fahrzeugquerrichtung erstreckenden Strukturbauteile (19) unter Ausbildung einer Hohlkammer (59) verschweißt ist.

2. Kraftfahrzeugkarosserie (11) nach Anspruch 1, **dadurch gekennzeichnet, dass** der Adapterträger (7, 47) auf einem Auflageflansch (57) der Strukturbauteile (19, 35) befestigt ist.

3. Kraftfahrzeugkarosserie (11) nach einem der vorhergehenden Ansprüche, **dadurch gekennzeichnet, dass** der Adapterträger (7, 47) mehrere Säulen miteinander verbindet.

4. Kraftfahrzeugkarosserie (11) nach einem der vorhergehenden Ansprüche, , **dadurch gekennzeichnet, dass** der Adapterträger (7, 47) im Wesentlichen als Rahmenstruktur ausgestaltet ist.

5. Kraftfahrzeugkarosserie (11) nach einem der vorhergehenden Ansprüche, **dadurch gekennzeichnet, dass** der Adapterträger (7, 47) im Wesentlichen einstückig ausgestaltet ist.

6. Kraftfahrzeugkarosserie (11) nach Anspruch 2, **dadurch gekennzeichnet, dass** der Adapterträger (7, 47) mehrere Schließbleche (49, 51, 53, 55) aufweist und dass die Schließbleche (49, 51, 53, 55) Flansche (63) zur Befestigung auf dem Auflageflansch (57) aufweisen.

7. Kraftfahrzeugkarosserie nach Anspruch 6, **dadurch gekennzeichnet, dass** die Schließbleche (49, 51, 53, 55) eine gerade, langgestreckte Form aufweisen und jeweils mit einem der Strukturbauteile (19, 35) verbunden sind.

8. Kraftfahrzeugkarosserie nach Anspruch 6 oder 7, **dadurch gekennzeichnet, dass** die Schließbleche (49, 51, 53, 55) rahmenförmig zueinander angeordnet sind.

9. Kraftfahrzeugkarosserie nach einem der vorhergehenden Ansprüche, **dadurch gekennzeichnet, dass** der Adapterträger (7, 47) Befestigungsvorrichtungen (37) für Dachöffnungssysteme und/oder Dachmodulvarianten aufweist, welche derart ausgestaltet sind, dass das jeweils in den Adapterträger (7, 47) eingefügte Dachöffnungssystem und/oder die eingefügte Dachmodulvarianten gegen ein anderes Dachöffnungssystem und/oder eine andere Dachmodulvarianten auswechselbar ist.

10. Kraftfahrzeugkarosserie nach einem vorhergehenden der Ansprüche, **dadurch gekennzeichnet, dass** ein nach oben offener mittlerer Bereich des Adapterträgers (7, 47) durch Einsetzen und Befestigen eines Blechdachs verschließbar ist.

11. Verfahren zum Herstellen einer Kraftfahrzeugkarosserie nach Anspruch 1, welches den Schritt des Verbindens einer Kraftfahrzeugkarosserie, welche wenigstens je zwei mittels zweier sich in Kraftfahrzeuglängsrichtung erstreckender Strukturbauteile sowie zweier sich in Fahrzeugquerrichtung erstreckender Strukturbauteile zu einem dachtragenden Rahmen verbundene A-, B- und C-Säulen aufweist, mit einem Adapterträger nach einem der Ansprüche 1 bis 7 umfasst.

12. Verfahren zum Herstellen einer Kraftfahrzeugkarosserie nach Anspruch 11, **dadurch gekennzeichnet, dass** zunächst eines der quer zur Fahrzeuglängsrichtung anzuordnenden Schließbleche mit dem jeweiligen Strukturbauteil verbunden wird und anschließend die in Fahrzeuglängsrichtung weisenden Schließbleche auf den in Fahrzeuglängsrichtung weisenden Strukturbauteilen und mit einer Überlappung auf dem quer zur Fahrzeuglängsrichtung angeordneten Schließblech befestigt werden.

13. Verfahren zum Herstellen einer Kraftfahrzeugkarosserie nach Anspruch 11 oder 12, **dadurch gekennzeichnet, dass** ein zweites der quer zu der Fahrzeuglängsrichtung und in der Verbindung einander gegenüberstehenden Säulen anzuordnendes Schließblech mit den in Fahrzeuglängsrichtung weisenden Strukturbauteilen überlappt wird.

## Claims

1. A motor vehicle body (11), comprising at least two pairs of pillars which are connected with each other by means of two structural components (35) extending in the longitudinal direction of the motor vehicle and by means of two structural components (19) extending in the transverse direction of the vehicle in order to form a roof-carrying frame (13), with an adapter support (7, 47) being placed on said roof-carrying frame (13) and being fastened thereto for accommodating roof windows (33), sliding roofs, roof opening systems and/or roof module variants in said adapter support (7), **characterized in that** the adapter support (7, 47) is welded onto at least one of the structural components (19) extending in the transverse direction of the vehicle by forming a hollow chamber (59).

2. A motor vehicle body (11) according to claim 1, **characterized in that** the adapter support (7, 47) is fastened to a support flange (57) of the structural components (19, 35).

3. A motor vehicle body (11) according to one of the preceding claims, **characterized in that** the adapter support (7, 47) connects several pillars with one another.

4. A motor vehicle body (11) according to one of the preceding claims, **characterized in that** the adapter support (7, 47) is substantially arranged as a frame structure.

5. A motor vehicle body (11) according to one of the preceding claims, **characterized in that** the adapter support (7, 47) is substantially arranged in an integral fashion.

6. A motor vehicle body (11) according to claim 2, **characterized in that** the adapter support (7, 47) comprises several edge plates (49, 51, 53, 55), and that the edge plates (49, 51, 53, 55) comprise flanges (63) for fixing to the support flange (57).

7. A motor vehicle body according to claim 6, **characterized in that** the edge plates (49, 51, 53, 55) have a straight, elongated shape and are respectively connected with one of the structural components (19, 35).

8. A motor vehicle body according to claim 6 or 7, **characterized in that** the edge plates (49, 51, 53, 55) are arranged a frame-like manner with respect to each other.

9. A motor vehicle body according to one of the preceding claims, **characterized in that** the adapter support (7, 47) comprises fastening apparatuses (37) for roof opening systems and/or roof module variants, which fastening apparatuses (37) are arranged in such a way that the roof opening system respectively inserted into the adapter support (7, 47) and/or the inserted roof module variants are exchangeable against another roof opening system and/or other roof module variants.

10. A motor vehicle body according to one of the preceding
claims, **characterized in that** an upwardly open middle region of the adapter support (7, 47) can be closed off by inserting and fixing a hardtop.

11. A method for producing a motor vehicle body according to claim 1, comprising the step of connecting a motor vehicle body with an adapter support according to one of the claims 1 to 7, which motor vehicle body comprises at least two respective A-, B- and C-pillars connected into a roof-carrying frame by means of two structural components extending in the longitudinal direction of the motor vehicle and by means of two structural components extending in the transverse direction of the vehicle.

12. A method for producing a motor vehicle body according to
claim 11, **characterized in that** at first one of the edge plates to be arranged transversely to the longitudinal direction of the vehicle is connected with the respective structural component, and thereafter the edge plates facing in the longitudinal direction of the vehicle are fixed to the structural components facing in the longitudinal direction of the vehicle and with an overlap to the edge plate arranged transversely to the longitudinal direction of the vehicle.

13. A method for producing a motor vehicle body according to claim 11 or 12, **characterized in that** a second edge plate to be arranged transversely to the longitudinal direction of the vehicle and in connection with the mutually opposite pillars is overlapped with the structural components facing in the longitudinal direction of the vehicle.

## Revendications

1. Carrosserie de véhicule à moteur (11) avec au moins deux paires de montants qui sont reliés entre eux au moyen de deux composants structurels (35) s'étendant dans le sens longitudinal du véhicule à moteur et de deux composants structurels (19) s'étendant dans le sens transversal du véhicule à moteur pour former un cadre (13) portant le toit, dans laquelle un support adaptateur (7, 47) est posé sur ce cadre (13) portant le toit et fixé à celui-ci, pour recevoir des fenêtres de toit (33), toits coulissants, systèmes d'ouverture de toit et/ou variantes de modules de toit dans ce support adaptateur (7), **caractérisée en ce que** le support adaptateur (7, 47) est soudé sur au moins un des composants structurels (19) qui s'étendent dans le sens transversal du véhicule à moteur en formant un compartiment creux (59).

2. Carrosserie de véhicule à moteur (11) selon la revendication 1, **caractérisée en ce que** le support adaptateur (7, 47) est fixée sur une bride d'appui (57) des composants structurels (19, 35).

3. Carrosserie de véhicule à moteur (11) selon l'une des revendications précédentes, **caractérisée en ce que** le support adaptateur (7, 47) relie plusieurs montants entre eux.

4. Carrosserie de véhicule à moteur (11) selon l'une des revendications précédentes, **caractérisée en ce que** le support adaptateur (7, 47) est conçu pour l'essentiel comme une structure de cadre.

5. Carrosserie de véhicule à moteur (11) selon l'une des revendications précédentes, **caractérisée en ce que** le support adaptateur (7, 47) est conçu pour l'essentiel d'un seul tenant.

6. Carrosserie de véhicule à moteur (11) selon la revendication 2, **caractérisée en ce que** le support adaptateur (7, 47) présente plusieurs tôles de fermeture (49, 51, 53, 55) et **en ce que** les tôles de fermeture (49, 51, 53, 55) présentent des brides (63) pour leur fixation sur la bride d'appui (57).

7. Carrosserie de véhicule à moteur selon la revendication 6, **caractérisée en ce que** les tôles de fermeture (49, 51, 53, 55) ont une forme droite et allongée et sont reliées chacune à l'un des composants structurels (19, 35).

8. Carrosserie de véhicule à moteur selon la revendication 6 ou 7, **caractérisée en ce que** les tôles de fermeture (49, 51, 53, 55) sont disposées les unes par rapport aux autres de façon à former un cadre.

9. Carrosserie de véhicule à moteur selon l'une des revendications précédentes, **caractérisée en ce que** le support adaptateur (7, 47) présente des dispositifs de fixation (37) pour des systèmes d'ouverture de toit et/ou des variantes de module de toit, qui sont conformés de telle façon que le système d'ouverture de toit et/ou les variantes de modules de toit introduits dans le support adaptateur (7, 47) soient interchangeables avec un autre système d'ouverture de toit et/ou une autre variante de module de toit.

10. Carrosserie de véhicule à moteur selon l'une des revendications précédentes, **caractérisée en ce qu'**une partie centrale du support adaptateur (7, 47) ouverte vers le haut peut être fermée par l'insertion et la fixation d'un toit en tôle.

11. Procédé pour fabriquer une carrosserie de véhicule à moteur selon la revendication 1, qui comprend l'étape d'assemblage d'une carrosserie de véhicule à moteur comprenant au moins deux montants A, deux montants B et deux montants C reliés pour former un cadre portant le toit au moyen de deux composants structurels qui s'étendent dans le sens longitudinal du véhicule à moteur et de deux composants structurels qui s'étendent dans le sens transversal du véhicule à moteur, avec un support adaptateur selon l'une des revendications 1 à 7.

12. Procédé pour fabriquer une carrosserie de véhicule à moteur selon la revendication 11, **caractérisé en ce que** l'une des tôles de fermeture à disposer transversalement par rapport au sens longitudinal du véhicule est d'abord assemblée au composant structurel correspondant et les tôles de fermeture orientées dans le sens longitudinal du véhicule sont ensuite fixées sur les composants structurels orientés dans le sens longitudinal du véhicule et fixées avec un chevauchement sur la tôle de fermeture disposée transversalement par rapport au sens longitudinal du véhicule.

13. Procédé pour fabriquer une carrosserie de véhicule à moteur selon la revendication 11 ou 12, **caractérisé en ce qu'**une deuxième tôle de fermeture disposée transversalement par rapport au sens longitudinal du véhicule et devant être disposée dans la liaison de montants qui se font face est recouverte partiellement par les composants structurels orientés dans le sens longitudinal du véhicule.
